# EUROPEAN PATENT APPLICATION

(11) **EP 4 797 098 A1**
(43) Date of publication of application: **26.08.2026**
(21) Application number: 24883886.4
(22) Date of filing: 23.05.2024
(51) Int. Cl.: G06F 11/10

(54) **DATA PROCESSING METHOD AND STORAGE SYSTEM**

(30) Priority: 31.10.2023 CN 202311444715
(71) Applicant: HUAWEI TECHNOLOGIES CO., LTD., Shenzhen 518129 (CN)
(72) Inventor: WANG, Long, Shenzhen, Guangdong 518129 (CN); GISSIN, Victor, Shenzhen, Guangdong 518129 (CN); YANG, Shengkai, Shenzhen, Guangdong 518129 (CN); GAO, Yixiao, Shenzhen, Guangdong 518129 (CN)
(74) Representative: Goddar, Heinz J.
(86) International application number: PCT/CN2024/095016
(87) International publication number: WO 2025/091873

(57) **Abstract**

This application provides a data processing method and a storage system, and relates to the field of storage technologies. In the method, the storage system may directly write data into a stripe, accumulate copies of the data, calculate check data of the copies of the data after the accumulated copies of the data reaches a specific amount, and write the check data into the stripe. Because the data does not start to be written into the stripe after the specific amount of data is accumulated, data writing efficiency can be improved.

## Description

### CROSS-REFERENCE TO RELATED APPLICATIONS

This application claims priority to Chinese Patent Application No. 202311444715.1, filed with the China National Intellectual Property Administration on October 31, 2023 and entitled "DATA PROCESSING METHOD AND STORAGE SYSTEM", which is incorporated herein by reference in its entirety.

### TECHNICAL FIELD

This application relates to the field of storage technologies, and in particular, to a data processing method and a storage system.

### BACKGROUND

To ensure reliability of data storage, a storage system may store data by using an erasure coding (erasure coding, EC) check mechanism. A main idea of the data storage using the EC check mechanism is to store check data of data during the data storage. If a part of the data is lost, the lost data can be restored by using a part of the data that is not lost and the check data.

In this mechanism, after a client initiates a write request for requesting to store to-be-written data, the storage system caches the to-be-written data and backs up the to-be-written data. The storage system accumulates the to-be-written data, and when accumulated to-be-written data reaches a specific amount of data, the storage system calculates check data. After the check data is calculated, the to-be-written data and the check data that have a size of one stripe are obtained. Then, the storage system writes the to-be-written data and the check data into a stripe. The stripe is distributed across a plurality of persistent memories in the storage system. Writing the to-be-written data and the check data into the stripe may be considered as flushing to a disk. Then, the storage system may delete a backup of the to-be-written data. In this mechanism, the storage system needs to accumulate the specific amount of data in order to start to flush the data to the disk, resulting in low data writing efficiency.

### SUMMARY

Embodiments of this application provide a data processing method and a storage system, to improve data writing efficiency.

According to a first aspect, an embodiment of this application provides a data processing method. The method may be performed by a storage system. The storage system may include a first storage node and a plurality of second storage nodes. Any storage node may be a device or an apparatus having a data storage function. For example, any storage node is, for example, a computational storage drive (computational storage drive, CSD), or may be a data processor (or a data processing unit) (data processing unit, DPU), or may be a DPU and a persistent memory. The persistent memory may be, for example, a solid-state drive (solid state disk, SSD). The CSD may have computing and storage functions. The method includes: receiving a first write request, where the first write request is for requesting to write first data; writing a first copy of the first data into a first stripe, and writing a second copy of the first data into a first storage node, where the first stripe is distributed across a plurality of second storage nodes; receiving another write request, where the another write request is for requesting to write other data; writing a first copy of the other data into the first stripe, and storing a second copy of the other data in the first storage node; if an amount of the first data and the other data reaches a first threshold, generating check data of the first data and the other data based on the second copy of the first data and the second copy of the other data; and writing the check data into the first stripe.

It should be understood that the another write request may be one or more write requests. When the another write request is one write request, the other data may be considered as data that the write request is for requesting to write. When the another write request is a plurality of write requests, the other data may be considered as data that the plurality of write requests are for respectively requesting to write. Optionally, the first threshold is an amount of data that at least one data unit is capable of storing, and the at least one data unit is a stripe unit that is in a plurality of stripe units of the first stripe and that is configured to store data. For example, the first stripe includes (N+M) stripe units. N stripe units are configured to store data (in other words, the N stripe units are data units), and M stripe units are configured to store check data (that is, the M stripe units are check units). In this case, the first threshold may be a sum of sizes of the N stripe units. Both N and M are positive integers.

In this embodiment of this application, after receiving a write request, the storage system may directly write data into a stripe. After the data reaches a specific threshold, the storage system may calculate check data by using a copy of the data in the first storage node, and write the check data into the stripe. There is no need to start to write the data and the check data into the stripe without calculating the check data. Therefore, in this embodiment of this application, data writing efficiency can be improved, and the write request can be quickly responded to, to help improve user experience.

In a possible implementation, the first stripe includes the plurality of stripe units, the plurality of stripe units include the at least one data unit configured to store the data, and a first part of data in the first copy of the first data is stored in a first data unit of the at least one data unit. The method further includes: if the first data unit is faulty, storing data that is in the second copy of the first data and that is the same as the first part of data in another data strip; and replacing the first data strip with the another data strip.

In the foregoing implementation, the faulty data unit may be recovered by using the second copy of the first data in the first storage node, so that reliability of a data writing process can be improved.

In a possible implementation, after storing the check data in the first stripe, the method further includes: deleting the second copy of the first data in the first storage node.

In the foregoing implementation, after the first stripe is fully written, a storage space of the first storage node may be released in a timely manner, to improve utilization of the storage space of the first storage node, reduce a redundant amount of data stored in a data storage process, and reduce write amplification.

In a possible implementation, before storing the second copy of other data in the first storage node, the method further includes: receiving a first read request, where the first read request is for requesting to read the first data; and in response to the first read request, reading data in a data strip of the first stripe, to obtain the first copy of the first data.

In the foregoing implementation, because the data is directly written into the stripe, when the first stripe is not fully written, the data may be directly read from the stripe, to respond to a read request of a user.

In a possible implementation, the method further includes: storing a third copy of the first data in a third storage node in the storage system.

In the foregoing implementation, a third copy of the data may be further stored, to improve a possibility of fault recovery of the data, and further ensure reliability of data writing.

In a possible implementation, before storing a second copy of second data in the first storage node, the method further includes: if the first storage node and/or a third storage node are/is faulty, determining a fourth copy of the first data; and storing the fourth copy of the first data in another storage node, where the another storage node is a storage node in the storage system other than the first storage node and the third storage node.

It should be understood that, when the first storage node is faulty, the fourth copy of the first data may be obtained from the third storage node or the first stripe. Alternatively, when the third storage node is faulty, the fourth copy of the first data may be obtained from the first storage node or the first stripe. Alternatively, when both the first storage node and the third storage node are faulty, the fourth copy of the first data may be obtained from the first stripe.

In the foregoing implementation, when the first storage node and/or the third storage node are/is faulty, a copy of the first data may be obtained by using a storage node that is not faulty in the storage system, to implement data restoration and ensure reliability of data writing.

According to a second aspect, an embodiment of this application provides a storage system. The system includes a first storage node and a plurality of second storage nodes. The first storage node is configured to receive a first write request, where the first write request is for requesting to write first data. The plurality of second storage nodes are configured to write a first copy of the first data into a first stripe, and the first storage node is further configured to write a second copy of the first data into the first storage node, where the first stripe is distributed across the plurality of second storage nodes. The first storage node is further configured to receive another write request, where the another write request is for requesting to write other data. The plurality of second storage nodes are further configured to write a part or all of a first copy of the other data into a data unit distributed in stripe units of the first stripe, and the first storage node is further configured to write a second copy of the other data into the first storage node. If an amount of the first data and the other data reaches a first threshold, the first storage node generates check data of the first data and the other data based on the second copy of the first data and the second copy of the other data. The plurality of second storage nodes are configured to write the check data into the first stripe.

In a possible implementation, the first threshold is an amount of data that at least one data unit is capable of storing, and the at least one data unit is a stripe unit that is in the plurality of stripe units of the first stripe and that is configured to store data.

In a possible implementation, the first stripe includes the plurality of stripe units, the plurality of stripe units include the at least one data unit configured to store the data, and a first part of data in the first copy of the first data is stored in a first data unit of the at least one data unit. The first storage node is further configured to: before the second copy of the other data is stored in the first storage node, if the first data unit is faulty, store data that is in the second copy of the first data and that is the same as the first part of data in another data strip, where the first data strip is replaced with the another data strip.

In a possible implementation, the first storage node is further configured to: after the check data is stored in the first stripe, delete the second copy of the first data in the first storage node.

In a possible implementation, any one of the plurality of second storage nodes is further configured to: receive a first read request, where the first read request is for requesting to read the first data; and in response to the first read request, read data in a data strip of the first stripe, to obtain the first copy of the first data.

In a possible implementation, the first storage node is one of the plurality of second storage nodes, and at least one check unit of the first stripe is distributed in the first storage node, where the at least one check unit stores a part or all of the check data; or the at least one data unit of the first stripe is distributed in the first storage node, where the at least one data unit stores a part or all of data in the first copy of the first data. In another possible implementation, the first storage node does not belong to the plurality of second storage nodes.

In a possible implementation, the first storage node includes a computational storage drive CSD; or the first storage node includes a data processor DPU and a persistent memory; or the first storage node includes a DPU. It should be understood that this is an example of a possible form of the first storage node, and actually, an implementation form of the first storage node is not limited.

According to a third aspect, an embodiment of this application provides a computer-readable storage medium. The computer-readable storage medium is configured to store a computer program or instructions. When the computer program or the instructions are run, the method according to any one of the first aspect and the possible implementations is implemented.

According to a fourth aspect, an embodiment of this application provides a computer program product including instructions. When the computer program product runs on a computer, the method according to any one of the first aspect and the possible implementations is implemented.

For beneficial effects of any one of the technical solutions in the second aspect to the fourth aspect, refer to the beneficial effects of the corresponding technical solution in the first aspect. Repeated parts are not described herein again.

### BRIEF DESCRIPTION OF DRAWINGS

FIG. 1 is a diagram of a principle of multi-copy storage;
FIG. 2 is a diagram of a principle of storage using an EC check mechanism;
FIG. 3 is a diagram of a scenario according to an embodiment of this application;
FIG. 4 is a deployment diagram of a storage system according to an embodiment of this application;
FIG. 5 is another deployment diagram of a storage system according to an embodiment of this application;
FIG. 6 is a diagram of an architecture of a CSD according to an embodiment of this application;
FIG. 7 is a diagram of a structure of a CSD according to an embodiment of this application;
FIG. 8 is a diagram of another structure of a CSD according to an embodiment of this application;
FIG. 9 is a diagram of still another structure of a CSD according to an embodiment of this application;
FIG. 10 is still another deployment diagram of a storage system according to an embodiment of this application;
FIG. 11 is yet another deployment diagram of a storage system according to an embodiment of this application;
FIG. 12 is a diagram of a data processing method according to an embodiment of this application;
FIG. 13 is a diagram of a data writing process according to an embodiment of this application;
FIG. 14 is a diagram of a fault recovery process according to an embodiment of this application;
FIG. 15 is a diagram of another fault recovery process according to an embodiment of this application;
FIG. 16 is a diagram of another data processing method according to an embodiment of this application; and
FIG. 17 is a diagram of another data writing process according to an embodiment of this application.

### DESCRIPTION OF EMBODIMENTS

To make objectives, technical solutions, and advantages of embodiments of this application clearer, the following further describes embodiments of this application in detail with reference to the accompanying drawings.

For ease of understanding, the following describes some terms in embodiments of this application.
1. Stripe: The stripe includes a plurality of stripe units (unit), and the stripe unit may also be referred to as a strip (strip) or a strip unit. Any two of the plurality of stripe units have a same size. One part of stripe units in the plurality of stripe units are configured to store data. The part of stripe units configured to store the data may also be referred to as data units, data strips, data strip units, or the like. The other part of stripe units in the plurality of stripe units are configured to store check data corresponding to the data. The part of stripe units configured to store the check data may also be referred to as check units, check strips, check strip units, or the like. The check data corresponding to the data may be obtained through data calculation by using an EC check algorithm. The EC check algorithm includes an array erasure coding algorithm, a Reed-Solomon (Reed-Solomon, RS) erasure coding algorithm, a low-density parity-check (low-density parity-check, LDPC) erasure coding algorithm, or the like. When data in a data unit is lost, the data in the data strip where data loss occurs may be restored by using check data in a check unit and data in a data unit without data loss.

One stripe may be mapped to (correspond to) physical storage spaces of a plurality of hard disks or a plurality of storage nodes. In other words, one stripe is obtained by mapping physical storage spaces of a plurality of hard disks or a plurality of storage nodes. That is, physical storage spaces that can be used by one stripe are actually provided by a plurality of hard disks or a plurality of storage nodes.

For example, one hard disk or one storage node included in a storage (storage) system may be divided into a plurality of physical chunks (chunks). Physical chunks corresponding to a plurality of hard disks or a plurality of storage nodes may be mapped into logical chunks, and these logical chunks may form a storage pool (pool). The plurality of logical chunks from the plurality of hard disks or the plurality of storage nodes may be considered as one logical chunk group, and the logical chunk group may include one or more stripes.

For ease of description, if a stripe is not fully occupied, the stripe may also be referred to as an active stripe. If a stripe unit in the stripe is not fully occupied, the strip unit may be referred to as an active stripe unit. If a data unit is not fully occupied, the data unit may be referred to as an active data unit, an active data strip, or the like.

2. Log storage space: The log storage space can be used to store data. For example, the log storage space may support data writing in an append write manner or an overwrite manner. In embodiments of this application, an example in which the log storage space supports data writing in the append write manner is used. The log storage space may be a logical storage space provided by a storage system. The storage system receives data and writes the data into the log storage space in the append write manner.

When the storage system writes data into a hard disk or a storage node, metadata of the log storage space may be used to record an amount of data that has been written into the hard disk or the storage node. When the storage system writes data into the hard disk or the storage node by using a cache, metadata of a log may be used to record an amount of data that has been written into the cache. The metadata of the log is used to record related information of the log storage space. For example, the metadata of the log records a total length of the log storage space, and records a length of the written data in the log storage space. The length of the written data in the log storage space may be an actual written length of the log storage space. In a scenario, if the storage system directly writes the data into the hard disk or the storage node, the actual written length is a length of the data that has been written into the hard disk or the storage node by the storage system. In another scenario, if the storage system writes the data into the hard disk or the storage node by using the cache, the actual written length may be a length of the data that has been written into the cache by the storage system.

It should be understood that, because the log storage space is a logical storage space, data content in the log storage space is actually stored in a physical storage space of the cache, the hard disk, or the storage node. Therefore, there is a mapping relationship between the log storage space and the storage space of the cache, or there is a mapping relationship between the log storage space and the storage space of the hard disk or the storage node.

It should be understood that one hard disk or storage node may correspond to a plurality of log storage spaces, and a storage space of the hard disk or the storage node is equal to a sum of the plurality of log storage spaces.

In actual application, the log storage spaces may be identified, for example, by using a same identity (identity document, ID) number. The log storage space in the storage system may be managed by a device cluster management module of the storage system. The device cluster management module may be integrated into any storage node in the storage system, or may be an independent management node, for example, one or more stripes distributed across a plurality of hard disks or a plurality of storage nodes. The one or more stripes may correspond to log storage spaces with a same ID.

In embodiments of this application, unless otherwise specified, a quantity of nouns represents "a singular noun or a plural noun", that is, "one or more". "At least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between the associated objects. For example, A/B indicates A or B. "At least one of the following items (pieces)" or a similar expression thereof means any combination of these items, including a singular item (piece) or any combination of plural items (pieces). For example, at least one of a, b, or c indicates a, b, c, "a and b", "a and c", "b and c", or "a, b, and c", where a, b, and c may be singular or plural.

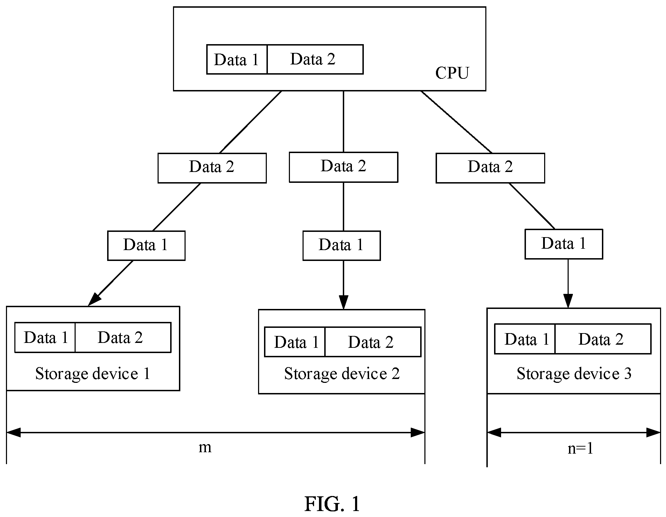

The following describes multi-copy storage with reference to a diagram of a principle of the multi-copy storage shown in FIG. 1.

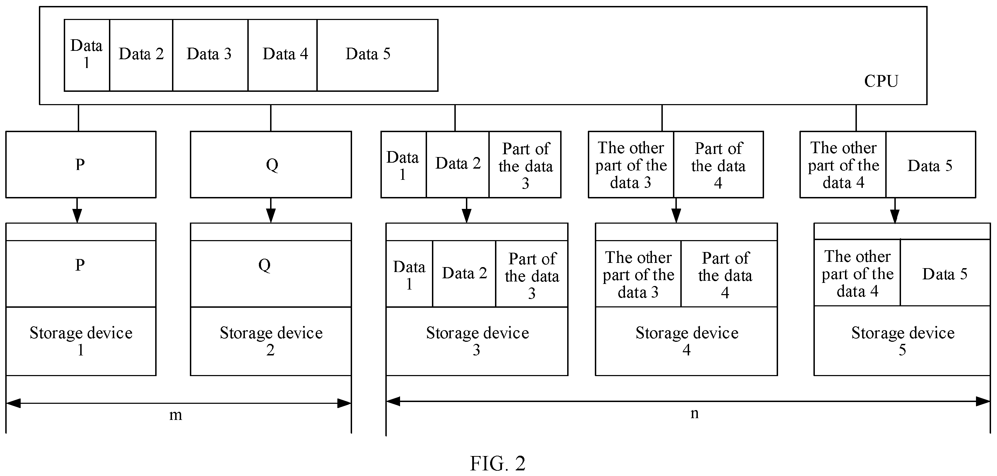

As shown in FIG. 1, a central processing unit (central processing unit, CPU) in a storage system may cache data (for example, data 1 and data 2), and respectively store a plurality of copies of the data 1 and the data 2 in a storage device 1, a storage device 2, and a storage device 3 in the storage system. As shown in FIG. 1, the storage device 1, the storage device 2, and the storage device 3 each store a copy of the data 1 and a copy of the data 2. In FIG. 2, m represents a quantity of storage devices configured to store a copy of data, and n represents a quantity of storage devices configured to store data. Both m and n are positive integers. For example, m is 2, and n is 1.

In a multi-copy storage mechanism, the storage system can immediately respond to a write request of a user after obtaining "m" copies through replication. This mechanism has a low requirement on computational power of the storage system. In addition, if a storage device is faulty, data can be quickly restored by using a copy in another storage device. However, the multi-copy storage requires a large capacity of a storage system. Because one piece of data is to be written, and an amount of data actually written under the multi-copy storage mechanism is (1+m), write amplification under this storage mechanism is (1+m). Therefore, this storage mechanism has a high requirement on network bandwidth. Write amplification is a ratio of an amount of data actually written to an amount of to-be-written data.

To reduce the disadvantages of the multi-copy storage, storage using an EC check mechanism is proposed. The following provides descriptions with reference to a diagram of a principle of storage using an EC check mechanism shown in FIG. 2.

As shown in FIG. 2, a CPU in a storage system may cache data (for example, data 1, data 2, data 3, data 4, and data 5). After it is determined that a data unit among stripe units included in a stripe is fully occupied with the data 1, the data 2, the data 3, the data 4, and the data 5, check data of the data 1, the data 2, the data 3, the data 4, and the data 5 is calculated. The CPU writes the data 1, the data 2, and a part of the data 3 into a data unit of a storage device 3, writes the other part of the data 3 and a part of the data 4 into a data unit of a storage device 4, writes the other part of the data 4 and the data 5 into a data unit of a storage device 5, and respectively writes a part of check data P of the check data and the other part of check data Q of the check data into a check unit of a storage device 1 and a check unit of a storage device 2. In FIG. 2, m represents a quantity of storage devices configured to store the check data, and n represents a quantity of storage devices configured to store the data.

During the storage using the EC check mechanism, because one piece of data is to be written, and an amount of data actually written under the multi-copy storage mechanism is (1+m/n), write amplification under this storage mechanism is (1+m/n). Therefore, a requirement on network bandwidth is reduced. However, the CPU needs to accumulate a specific amount of data before calculating the check data, and needs to calculate the check data before writing the check data and the data into the storage device. This results in low data writing efficiency, and long time for responding to a user.

In view of this, embodiments of this application provide a data processing method. In the method, in a data writing process, data is directly written into a stripe, and data in an active stripe is protected based on a multi-copy replication method. Once accumulated data reaches a specific amount, check data may be calculated and strip check data is written into the active stripe. This is equivalent to finally storing data by using an EC check mechanism. In the method, the data is directly written into the stripe, that is, the data starts to be written into the stripe without waiting for the check data to be calculated first. Therefore, data writing efficiency can be improved, and finally the data is stored in a storage manner using an EC check mechanism, so that write amplification of the data is actually the same as write amplification in the storage using the EC check mechanism. In comparison with the multi-copy storage, write amplification can be reduced, and a requirement on a storage capacity of a storage system is reduced. In this way, the method achieves respective advantages of the multi-copy storage and the storage using the EC check mechanism, and reduces respective disadvantages of the multi-copy storage and the storage using the EC check mechanism.

The method provided in embodiments of this application is applicable to any scenario related to data writing. The following describes, by using examples, scenarios to which the method provided in embodiments of this application can be applied.

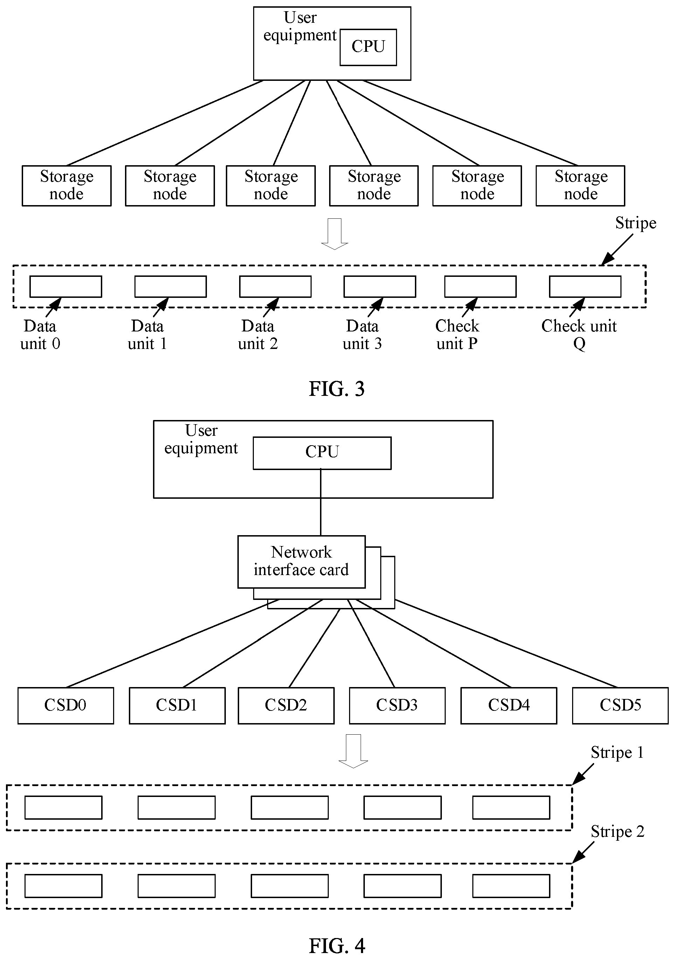

FIG. 3 is a diagram of a scenario according to an embodiment of this application. Alternatively, FIG. 3 may be understood as a diagram of an architecture of a storage system, for example, may be considered as a diagram of an architecture of a distributed storage system. As shown in FIG. 3, the scenario includes a user equipment and a plurality of storage nodes in the storage system. It should be understood that, in FIG. 3, an example in which the plurality of storage nodes include six storage nodes is used. Actually, a quantity of storage nodes included in the storage system is not limited.

For example, a user may read and write data in the storage system by using an application. A device running the application may be considered as the user equipment. The user equipment may be a physical machine or a virtual machine, for example, a fixed device, a mobile device, a handheld device, a wearable device, a vehicle-mounted device, or a personal computer. The user equipment includes a CPU, and the CPU of the user equipment may be configured to initiate a write request, a read request, or the like to the storage system. Correspondingly, the plurality of storage nodes in the storage system may provide a data reading/writing service for the user.

Each of the plurality of storage nodes may have a data storage function and/or a calculation function. When the plurality of storage nodes provide the data writing service for the user, and a storage node implements a data storage function and a calculation function (for example, the storage node is configured to store a copy of data and calculate check data of the data), the storage node may be referred to as a first storage node, or referred to as a master device (master). When a storage node implements a storage function (for example, a persistent storage function, which is specifically, for example, persistently storing data and check data corresponding to the data), the storage node may be referred to as a second storage node or a slave device. When a storage node implements a storage function (for example, a temporary storage function, which is specifically, for example, storing a copy of data), the storage node may be referred to as a third storage node, a data copy storage node, a data copy node, or the like.

It should be understood that when a storage node in the plurality of storage nodes is used as the first storage node, the storage node may also have a function of the second storage node, or when any storage node is used as the third storage node, the storage node may also have a function of the second storage node. This is not limited in embodiments of this application. In other words, any storage node in the plurality of storage nodes may serve as both the first storage node and the second storage node, or as both the third storage node and the first storage node. This is not specifically limited herein.

For example, the plurality of storage nodes may include a plurality of second storage nodes, and the plurality of second storage nodes may specifically write data and check data into a stripe. K1 second storage nodes in the plurality of second storage nodes may write the data into data units (a data unit 0, a data unit 1, a data unit 2, and a data unit 3 shown in FIG. 3) of the K1 second storage nodes, and K2 second storage nodes may write the check data into check units (a check unit P and a check unit Q shown in FIG. 3) of the K2 second storage nodes. K1 and K2 are positive integers. The K1 second storage nodes may also be referred to as slave data devices (data slaves), and the K2 second storage nodes may be referred to as slave parity devices (parity slaves).

It may be understood that the data units of the stripe may be obtained by mapping physical storage spaces of the K1 second storage nodes, and the check units of the stripe are obtained by mapping physical storage spaces of the K2 second storage nodes. The K2 second storage nodes may also be considered as the slave parity devices. Storage media of the physical storage spaces that are of the K1 second storage nodes and that are for mapping the data units of the stripe may be of any type, for example, SSD and/or flash memory (flash). This is not specifically limited herein. Similarly, storage media of the physical storage spaces that are of the K2 second storage nodes and that are for mapping the check units of the stripe may be of any type, for example, solid-state drive (solid state disk, SSD) and/or flash. This is not specifically limited herein.

Structures of any two of the plurality of storage nodes in embodiments of this application may be the same or different. This is not specifically limited herein.

In a possible implementation, a part or all of the plurality of storage nodes (for example, the first storage node, the second storage node, and the third storage node) may be implemented as computational storage drives (computational storage drives, CSDs). The CSD may be considered as a micro server or a lightweight disk enclosure CSD. In comparison with a common hard disk, the CSD has both a data storage capability and a computational capability. An example in which the plurality of storage nodes are all implemented by using the CSD is used below for description with reference to a deployment diagram of a storage system shown in FIG. 4. FIG. 4 may also be considered as a diagram of an architecture of a distributed storage system. As shown in FIG. 4, the scenario includes a user equipment and a plurality of CSDs (CSDO to CSD5 shown in FIG. 4). The user equipment may include a CPU, and the CPU of the user equipment initiates a write request, a read request, or the like.

Any one of the plurality of CSDs in FIG. 4 may communicate with the user equipment via any one of a plurality of network interface cards. Any one of the plurality of network interface cards may be deployed on one of the plurality of CSDs. For example, any one of the network interface cards is detachably disposed on (for example, plugged into) one of the plurality of CSDs, or any one of the network interface cards may be integrated on one of the plurality of CSDs (in other words, the CSD may include the network interface card). Any network interface card may be a network interface controller (network interface controller, NIC), which is specifically, for example, a smart (smart) NIC.

When the plurality of CSDs provide a data writing service for the user equipment, CSDO to CSD4 may write data into one or more stripes (for example, a stripe 1 and a stripe 2 in FIG. 4). Because a stripe in CSD0 to CSD4 is configured to persistently store data, CSD0 to CSD4 may be considered as examples of the second storage node.

For example, CSD0 to CSD3 may write data into a data unit of the stripe, in other words, CSD0 to CSD3 may be considered as examples of the K1 second storage nodes. CSD4 may write check data of the data into a check unit of the stripe, in other words, CSD4 may be considered as an example of the K2 second storage nodes. In addition, CSD4 may be further configured to store a copy of the data, in other words, CSD4 may also be considered as an example of the third storage node. CSD5 may be configured to calculate the check data of the data, in other words, CSD5 may be considered as an example of the first storage node.

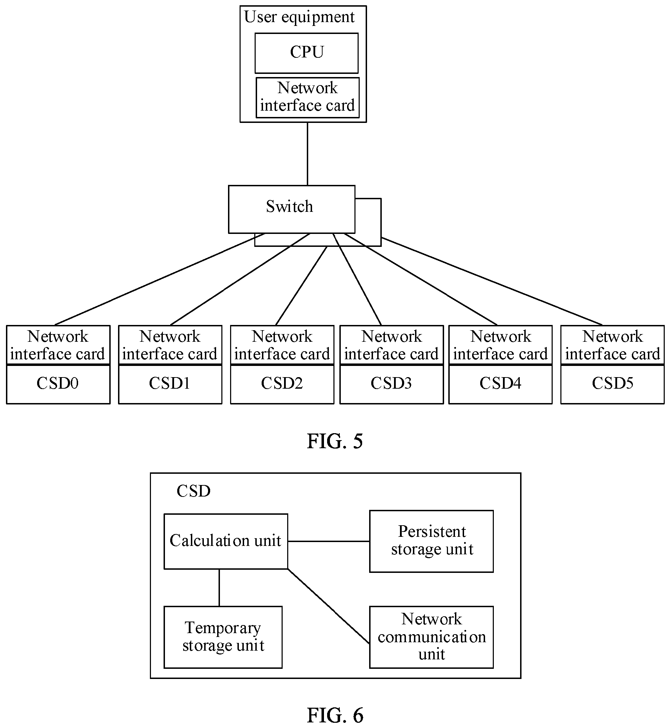

In FIG. 4, an example in which the plurality of CSDs directly communicate with the user equipment via the network interface card is used. In addition, the plurality of CSDs may alternatively communicate with the user equipment sequentially via a network interface card and a switch (switch). For example, any one of the plurality of CSDs may communicate with a network interface card in the user equipment sequentially via a network interface card deployed on the CSD and a switch. Because the switch is added, in this case, the user equipment does not need to sense specific information of the CSD, and a request of the user equipment is routed to a corresponding CSD via the switch. For details, refer to a deployment diagram of a storage system shown in FIG. 5. FIG. 5 may also be considered as a diagram of an architecture of a distributed storage system. FIG. 5 shows a user equipment, a plurality of switches, and a plurality of CSDs (CSDO to CSD5 shown in FIG. 5). Optionally, any two of the plurality of CSDs may communicate with each other via the switch.

When the plurality of CSDs provide a data writing service for the user equipment, CSD0 to CSD5 may write data into one or more stripes. Because a stripe in CSD0 to CSD5 is configured to persistently store data, CSD0 to CSD5 may be considered as examples of the plurality of second storage nodes.

For example, CSD0 to CSD3 may write data into a data unit of the stripe, in other words, CSD0 to CSD3 may be considered as examples of the K1 second storage nodes. CSD4 and CSD5 may write check data of the data into a check unit of the stripe, in other words, CSD4 and CSD5 may be considered as examples of the K2 second storage nodes. In addition, CSD4 may be further configured to store a copy of the data, in other words, CSD4 may also be considered as an example of the third storage node. CSD5 may be further configured to calculate the check data of the data, in other words, CSD5 may also be considered as an example of the first storage node.

As described above, the CSD in embodiments of this application may be used as an example of a storage node, and is configured to store data, calculate check data of the data, and/or the like. For example, FIG. 6 is a diagram of an architecture of a CSD according to an embodiment of this application. The CSD includes a calculation unit, a persistent storage unit, and a temporary storage unit. Optionally, the CSD further includes a network communication unit.

The calculation unit is configured to implement a calculation function, for example, is configured to calculate check data of data. The calculation unit is, for example, a field programmable gate array (field programmable gate array, FPGA) or a CPU. The persistent storage unit is configured to implement some storage functions. For example, the persistent storage unit may be configured to persistently store data, for example, is a flash and/or an SSD. The temporary storage unit may be configured to implement some storage functions, for example, may be configured to cache data. The temporary storage unit includes, for example, a RAM. The network communication unit may be configured to implement a communication function, for example, is used by the CSD to communicate with the outside. The network communication unit is, for example, a network interface card.

For example, when writing data, the calculation unit may write the data into the persistent storage unit, and cache a copy (or a backup) of the data in the temporary storage unit. After cached data in the temporary storage unit reaches a specific threshold, the calculation unit may calculate check data of the data by using a copy (or a backup) of the cached data in the temporary storage unit, and write the check data into the persistent storage unit.

It should be understood that the calculation unit, the persistent storage unit, the temporary storage unit, and the network communication unit may be implemented in a plurality of manners. Specific implementations of these units are not limited in this embodiment of this application.

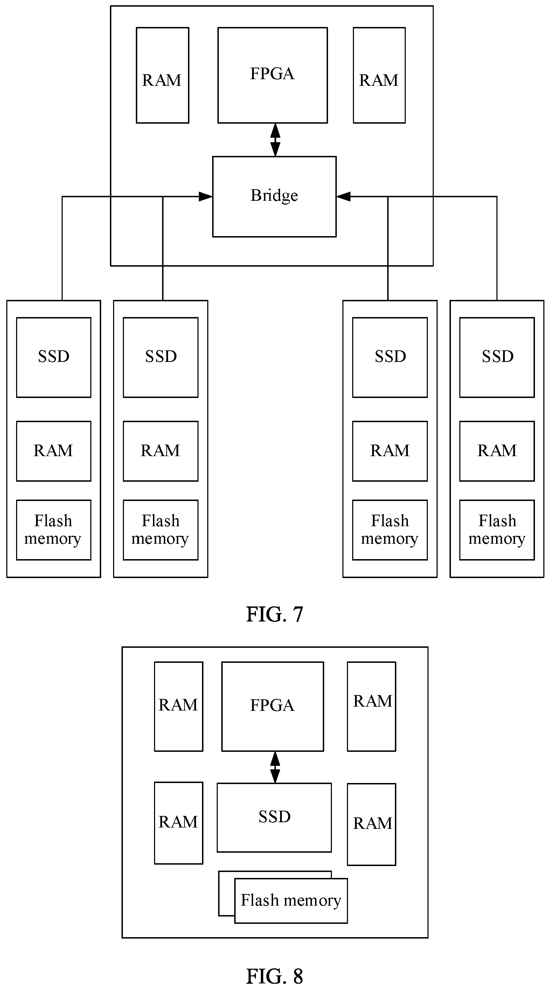

The following describes an example of a possible structure of the CSD (for example, the CSD in FIG. 6) in the foregoing embodiments of this application with reference to diagrams of structures of CSDs shown in FIG. 7 to FIG. 9.

In the CSD shown in FIG. 7, an example in which a calculation unit includes an FPGA is used. In addition to the FPGA, the CSD further includes an internal memory and an external memory. The external memory herein may be understood as a memory that is not disposed on a same printed circuit board (printed circuit board, PCB) as the FPGA. The external memory includes, for example, an SSD, a RAM, and a flash. The external memory may be used as an example of a persistent storage unit. The internal memory, for example, includes a random access memory (random access memory, RAM), and may be used as an example of a temporary storage unit. The FPGA may be connected to the external memory via a bridge (bridge). The RAM in FIG. 7 includes a static memory (static RAM, SRAM) and a dynamic memory (dynamic RAM, DRAM).

For example, in a data writing process, the FPGA may be configured to calculate check data and the like. The internal memory may be configured to cache a copy of data, and when the FPGA determines that data in the internal memory reaches a specific amount of data, the check data of the data may be written into the external memory. In addition to storing the check data of the data, the external memory may further persistently store the data and the like.

Different from those in FIG. 7, memories such as an SSD, a RAM, and a flash in FIG. 8 may be embedded in a same PCB as an FPGA. For functions of the FPGA and the various memories in FIG. 8, refer to functions of the FPGA and the various memories in FIG. 7 respectively. Repeated parts are not described again.

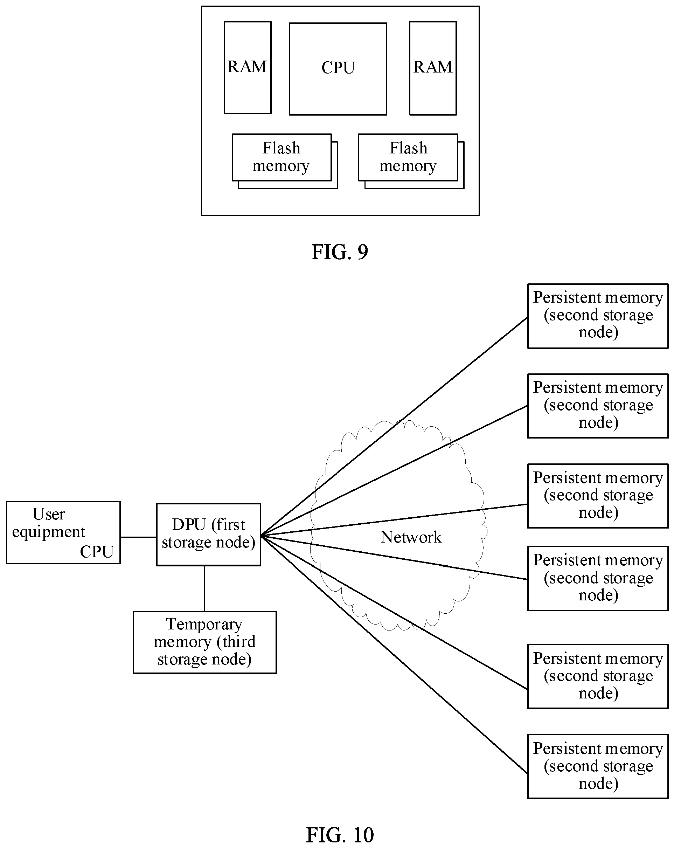

The CSD shown in FIG. 9 includes a CPU and some memories. The memories include, for example, a RAM and a flash. The CPU may be used as an example of a calculation unit, or may be configured to calculate check data or the like. The RAM may be used as an example of a temporary storage unit. The flash may be used as an example of a persistent storage unit. The CPU in FIG. 9 may be configured to calculate the check data of data and the like. For functions of the various memories in FIG. 9, refer to the functions of the memories in FIG. 7 respectively. Repeated parts are not described again.

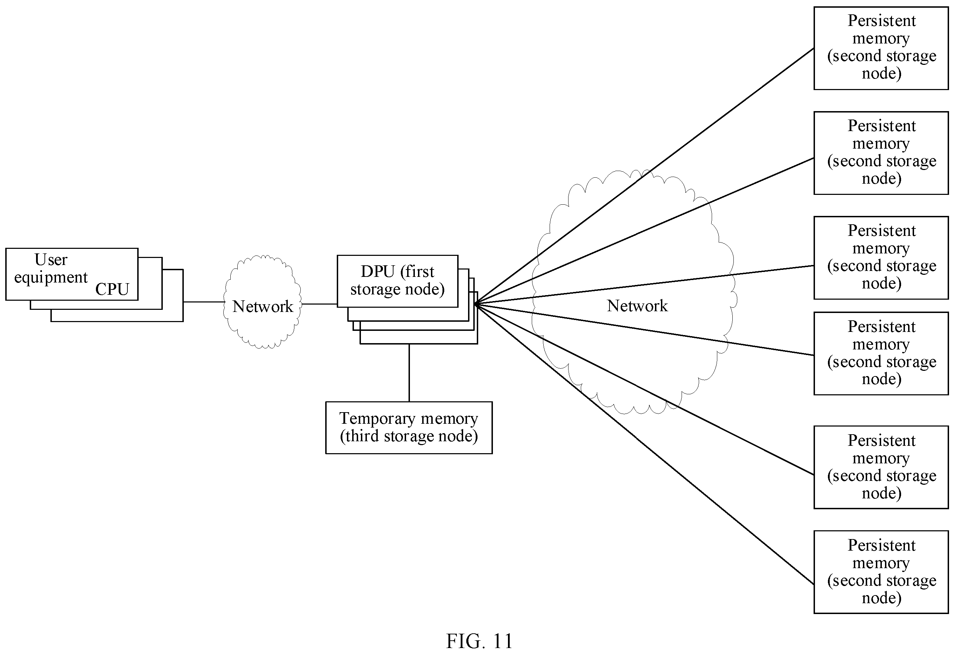

In another possible implementation, in the plurality of storage nodes, the first storage node may include a data processor (or referred to as a data processing unit) (data processing unit, DPU), the second storage node may include a persistent memory, and the third storage node may include a temporary memory. The temporary memory is, for example, a RAM. The DPU is configured to control writing of data into the temporary memory and/or the persistent memory. The persistent memory may be, for example, a hard disk. The following provides descriptions with reference to a deployment diagram of a storage system shown in FIG. 10 or FIG. 11.

The storage system includes a user equipment and a plurality of storage nodes. In FIG. 10, a first storage node may include a CPU, a second storage node may include a persistent memory, and a third storage node may include a temporary memory. It should be understood that FIG. 10 shows six persistent memories, and actually, a quantity of persistent memories is not limited.

The user equipment may access the plurality of persistent memories and the temporary memory via a DPU. The DPU may communicate with the CPU in the user equipment through a peripheral component interconnect express (peripheral component interconnect express, PCIe). The DPU may communicate with the plurality of persistent memories via a network (for example, a data center (data center, DC) network).

The DPU is configured to write data into a corresponding persistent memory, and read corresponding data from a persistent memory. Any one of the plurality of persistent memories may be a device, a hard disk, or the like that has a storage function. Any persistent memory may be, for example, implemented as an SSD or a standard "just a bunch of flashes/drives" (just a bunch of flashes/drives, JBOF/D). A specific form of the persistent memory is not limited in this embodiment of this application.

A part or all of the plurality of persistent memories in FIG. 10 may include one or more stripes. When providing a data service for the user equipment, the DPU may write data into the stripe.

For example, the DPU may calculate check data of the data and cache a copy of the data. A part or all of the plurality of persistent memories may be configured to persistently store data. The temporary memory may be configured to cache a copy of the data.

In FIG. 10, the CPU and the DPU may communicate with each other via the PCIe. Actually, the DPU may alternatively communicate with the CPU via a network. The network is, for example, a wireless network. As shown in FIG. 11, any one of a plurality of CPUs may communicate with any one of a plurality of DPUs via a network. FIG. 11 shows six persistent memories, and actually, a quantity of persistent memories is not limited. A plurality of user equipments may access the plurality of persistent memories via any one of the plurality of DPUs. The plurality of DPUs may form a DPU pool.

A part or all of the plurality of persistent memories in FIG. 11 may include one or more stripes. When providing a data service for the user equipment, the DPU may write data into the stripe.

For example, the DPU may calculate check data of the data and cache a copy of the data. Alternatively, the DPU may calculate check data of the data, and cache a copy of the data into at least one persistent memory. A part or all of the plurality of persistent memories may be configured to persistently store data. A temporary memory may be configured to cache a copy of the data.

It should be understood that the foregoing are examples of scenarios to which embodiments of this application are applicable, and actually, a scenario to which embodiments of this application are applicable is not limited. The following describes the method provided in embodiments of this application with reference to the accompanying drawings.

In the accompanying drawings corresponding to embodiments of this application, all steps represented by dashed lines are optional steps.

In embodiments of this application, the user equipment is, for example, any user equipment in FIG. 3, FIG. 4, FIG. 5, FIG. 10, or FIG. 11. In embodiments of this application, the first storage node may be, for example, the first storage node in FIG. 3, or may be CSD5 in FIG. 4 or any CSD in FIG. 5 to FIG. 9, or may be the DPU in FIG. 10 or FIG. 11, or may be the DPU and the at least one persistent memory in FIG. 10 or FIG. 11. In embodiments of this application, any one of the plurality of second storage nodes may be, for example, any one of the plurality of second storage nodes in FIG. 3, or may be any one of CSD0 to CSD3 in FIG. 4 or any CSD in FIG. 5 to FIG. 9, or may be any persistent memory in FIG. 10 or FIG. 11, or may be the DPU, the at least one persistent memory, or the like in FIG. 11.

In embodiments of this application, the third storage node may be, for example, any one of the at least one third storage node in FIG. 3, or may be CSD4 in FIG. 4 or any CSD in FIG. 5 to FIG. 9, or may be any persistent memory in FIG. 10 or FIG. 11, or may be the DPU and one persistent memory in FIG. 11; the K1 second storage nodes may be the K1 second storage nodes in FIG. 3; and the K2 second storage nodes may be the K2 second storage nodes in FIG. 3. The first stripe in embodiments of this application may be any stripe in FIG. 3, FIG. 4, FIG. 5, FIG. 10, or FIG. 11. This is not specifically limited in embodiments of this application.

It should be understood that, if the technical solutions provided in embodiments of this application are applied to another storage system, a name and/or a function of a node may vary. This is not limited.

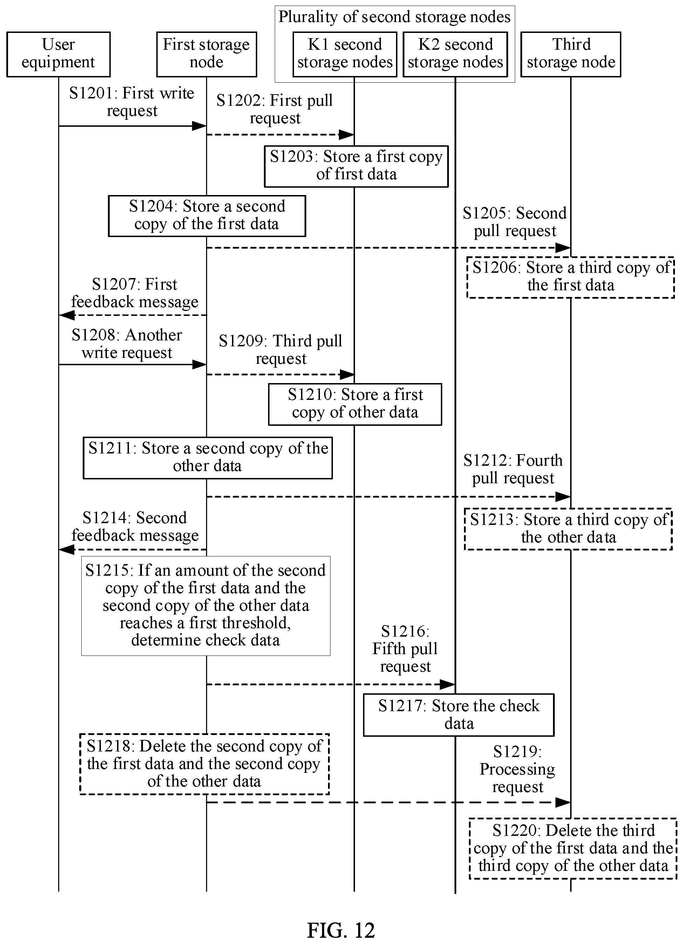

FIG. 12 is a flowchart of a data processing method according to an embodiment of this application. FIG. 12 shows steps S1201 to S1220. The following separately describes the steps.

In a first phase, a storage system writes a first copy of first data into a first stripe. For details, refer to the following process in S1201 to S1207.

S1201: A user equipment sends a first write request to a first storage node. Correspondingly, the first storage node receives the first write request from the user equipment.

For example, the user equipment may directly send the first write request to the first storage node, or may send the first write request to the first storage node via a switch. The first write request is for requesting to write the first data. Optionally, the first write request includes the first data, address information of the first data, and/or the like.

S1202: The first storage node separately sends a first pull request to K1 second storage nodes. Correspondingly, the K1 second storage nodes separately receive the first pull request from the first storage node.

The K1 second storage nodes may be storage nodes that are in a plurality of second storage nodes and that include a data unit of the first stripe. The first pull request is for requesting to write the first copy of the first data into the first stripe. The first pull request may include first address information of the first data and a size of data that is in the first copy of the first data and that needs to be written by each of the K1 second storage nodes. The first address information indicates addresses used by the K1 second storage nodes to obtain the first data.

The first storage node may further create a log storage space, and the log storage space may be used to record information in a data processing process. Alternatively, a log storage space has been previously created in the storage system, and the first storage node may directly obtain an ID or the like of the log storage space. The first storage node may include the log ID and a first offset (offset) of the log storage space in the first pull request. The log ID uniquely indicates the log storage space. The first offset indicates a location for storing the first data in the log storage space, for example, a location for storing the first data in the first stripe. The log ID and the first offset uniquely identify the first data in the storage system.

S1202 may be a manner of triggering the K1 second storage nodes to write the first copy of the first data. For example, the first storage node may further directly send the first copy of the first data to the K1 second storage nodes. In this case, step S1202 does not need to be performed. In other words, step S1202 is an optional step, and is shown by using a dashed line in FIG. 12.

S1203: The K1 second storage nodes store the first copy of the first data.

After the K1 second storage nodes receive the first pull request, the K1 second storage nodes may respond to the first pull request, and write corresponding data in the first copy of the first data into the data unit of the first stripe of the K1 second storage nodes. It should be understood that the first data may be written into data units of a part or all of the K1 second storage nodes. This is not specifically limited.

When the first write request includes the first data, the K1 second storage nodes may obtain the first copy of the first data from the first storage node. It should be understood that each of the K1 second storage nodes may be configured to store a part of the data in the first copy of the first data. Therefore, each second storage node may obtain the data that needs to be stored by the second storage node. For example, the K1 second storage nodes include a second storage node A and a second storage node B, and the first data includes a data chunk D1 and a data chunk D2. The second storage node A is configured to store a copy of the data chunk D1, and in this case, the second storage node A may obtain only the copy of the data chunk D1. In addition, the second storage node B is configured to store a copy of the data chunk D2, and in this case, the second storage node B may obtain only the copy of the data chunk D2. Alternatively, the first pull request indicates that the address information of the first data is an address used by the user equipment to store the first data, and in this case, the K1 second storage nodes may obtain the first copy of the first data from the user equipment.

Optionally, the K1 second storage nodes may write the first data into the data units of the K1 second storage nodes. Alternatively, the K1 second storage nodes may write the first copy of the first data into a cache, and then write the first copy into the data units of the K1 second storage nodes.

After the K1 second storage nodes store the first copy of the first data, each of the K1 second storage nodes may further record first information. The first information indicates a mapping relationship among the log ID, the first offset, and an address where each second storage node stores the data in the first copy of the first data. The address of the first data in each second storage node indicates a specific location in the second storage node at which a specific part of data in the first copy of the first data is stored.

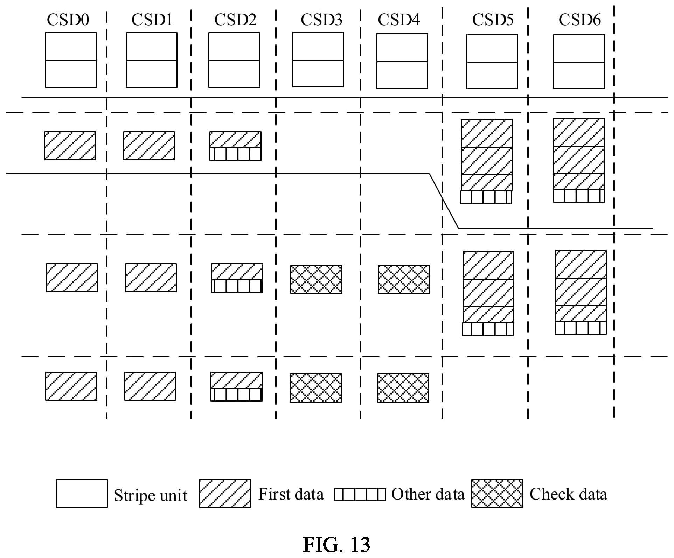

The following uses an example in which CSD0 to CSD4 are the plurality of second storage nodes, the first storage node is CSD5, and a third storage node is CSD6, to describe a data writing process in an embodiment of this application with reference to a diagram of a data writing process shown in FIG. 13. As shown in FIG. 13, CSD5 may separately send the first pull request to CSD0, CSD1, and CSD2, and data units of CSD0, CSD1, and CSD2 are configured to store the first copy of the first data. As shown in FIG. 13, the first data is written into the data units of CSD0, CSD1, and CSD2. However, because an amount of the first data is insufficient, the data unit of CSD2 is not fully occupied.

S1204: The first storage node stores a second copy of the first data.

The first storage node may obtain the second copy of the first data from the user equipment, and store the second copy of the first data. Alternatively, the first storage node may obtain the second copy of the first data from the K1 second storage nodes, and store the second copy of the first data. In this way, when a part or all of the K1 second storage nodes are faulty, the first storage node may perform fault recovery based on the second copy of the first data, to improve data storage reliability. In addition, this helps the first storage node accumulate data and subsequently calculate check data of the data.

When storing the second copy of the first data, the first storage node may store the second copy of the first data in contiguous storage spaces without additional mapping. This is not limited. It is clear that there may be a plurality of types of storage media that are in the first storage node and that are configured to store the second copy of the first data. This is not limited. For example, the storage medium may be a RAM (for example, an SRAM or a DRAM) in the first storage node.

Still refer to the example shown in FIG. 13. CSD5 may further store the second copy of the first data.

S1205: The first storage node sends a second pull request to the third storage node. Correspondingly, the third storage node receives the second pull request from the first storage node. The second pull request is for requesting to write a third copy of the first data into the third storage node. For content of the second pull request, refer to the foregoing content of the first pull request. Details are not described herein again.

S1205 may be a manner of triggering the third storage node to write the third copy of the first data. For example, the first storage node may further directly send the third copy of the first data to the third storage node. In this case, step S1205 does not need to be performed. In other words, step S1205 is an optional step, and is shown by using a dashed line in FIG. 12.

S1206: The third storage node stores the third copy of the first data.

The third storage node may obtain the third copy of the first data from the first storage node, or may obtain the third copy of the first data from the K1 second storage nodes, and store the third copy of the first data. For example, the first storage node may store the third copy of the first data in a RAM (for example, an SRAM or a DRAM) in the third storage node. This is not limited.

In S1205 and S1206, the third storage node may further store another copy of the first data, and this is more conducive to fault recovery, and improves data writing reliability. It is clear that the third storage node may alternatively not need to store the third copy of the first data. In other words, S1205 and S1206 are optional steps, and are shown by using dashed lines in FIG. 12.

Still refer to the example shown in FIG. 13. CSD5 may request CSD6 to store the third copy of the first data. Therefore, CSD6 stores the third copy of the first data.

S1207: The first storage node sends a first feedback message to the user equipment. Correspondingly, the user equipment receives the first feedback message from the first storage node. The first feedback message indicates that writing of the first data is completed, and may be considered as a feedback for the first write request.

First feedback information may further include the log ID and the first offset. In this way, this helps the user equipment subsequently initiate, based on the log ID and the first offset, a read request corresponding to the first data to the storage system.

After S1207, the user equipment may be supported in reading the first data. For example, the user equipment may initiate a first read request (for example, may send the first read request to any one of the plurality of second storage nodes). The first read request is for requesting to read the first data. Optionally, the first read request may carry the log ID and the first offset.

Any second storage node may read, based on the log ID and the first offset, data corresponding to the first data from the plurality of second storage nodes, to obtain the first copy of the first data, and feed back the first copy of the first data to the user equipment.

Optionally, S1207 is an optional step, and is shown by using a dashed line in FIG. 12.

In a second phase, the storage system writes a first copy of other data into the first stripe. For details, refer to the following process in S1208 to S1214.

S1208: The user equipment sends another write request to the first storage node. Correspondingly, the first storage node receives the another write request from the user equipment. The another write request is for requesting to write the other data. The another write request is at least one write request other than the first write request. In this embodiment of this application, an example in which the another write request is one write request is used for description.

For sending of the another write request by the user equipment and content of the another write request, refer to the foregoing sending of the first write request by the user equipment in S1201 and the content of the first write request respectively. Repeated parts are not described again.

S1209: The first storage node sends a third pull request to a part or all of the K1 second storage nodes. Correspondingly, the part or all of the K1 second storage nodes separately receive the third pull request from the first storage node.

The part or all of the K1 second storage nodes may be second storage nodes whose data units of the first stripe corresponding to the K1 second storage nodes are not fully occupied. For example, if the first data occupies only a part of a data unit of one of the K1 second storage nodes, it indicates that a data unit of the first stripe corresponding to any one of the K1 second storage nodes is not fully occupied. Therefore, the first storage node may send the third pull request to all of the K1 second storage nodes. Alternatively, for example, the first data occupies only data units of a part of the K1 second storage nodes. In other words, no data is stored in data units of the other part of the K1 second storage nodes. Therefore, the first storage node may send the third pull request to the other part of the K1 second storage nodes.

The third pull request is for requesting to write the first copy of the other data into corresponding data units of a part or all of the K1 second storage nodes. The third pull request may include first address information of the other data and a size of data that is in the first copy of the other data and that needs to be written by each of the K1 second storage nodes. In addition, content of the third pull request may include the log ID and a second offset. The second offset indicates a location for storing the other data in the log storage space, for example, a location for storing the other data is in the first stripe.

Optionally, S1209 is an optional step, and is shown by using a dashed line in FIG. 12.

S1210: The part or all of the K1 second storage nodes store the first copy of the other data. This is equivalent to writing the other data into the first stripe, to be specific, writing the other data into a data unit of the first stripe. For a manner in which the part or all of the K1 second storage nodes obtain the first copy of the other data, refer to the foregoing content of obtaining the first copy of the first data. Details are not described herein again. Optionally, the K1 second storage nodes may write the other data into the data units of the K1 second storage nodes. Alternatively, the K1 second storage nodes may write the first copy of the other data into the cache, and then write the first copy into the data units of the K1 second storage nodes. It should be understood that each of the part or all of the K1 second storage nodes may be configured to store a part of data in the first copy of the other data. Therefore, each second storage node may obtain the data that needs to be stored by the second storage node.

After the part or all of the K1 second storage nodes store the first copy of the other data, each of the part or all of the K1 second storage nodes may further record second information. The second information indicates a mapping relationship among the log ID, the second offset, and an address where each second storage node stores the data in the first copy of the other data. The address of the other data in each second storage node indicates a specific location in the second storage node at which a specific part of data in the first copy of the other data is stored.

Still refer to the example shown in FIG. 13. CSD5 may send the third pull request to CSD2, and CSD2 may correspondingly store the first copy of the other data.

S1211: The first storage node stores a second copy of the other data.

For a manner in which the first storage node obtains the first copy of the other data, refer to the foregoing content of obtaining the first copy of the first data. Details are not described herein again.

For example, still refer to FIG. 13. CSD5 further stores the second copy of the other data.

S1212: The first storage node sends a fourth pull request to the third storage node. Correspondingly, the third storage node receives the fourth pull request from the first storage node. The fourth pull request is for requesting to write a third copy of the other data into the third storage node. For content of the fourth pull request, refer to the foregoing content of the first pull request. Details are not described herein again.

Optionally, S1212 is an optional step, and is shown by using a dashed line in FIG. 12.

S1213: The third storage node stores the third copy of the other data. For content of storing the third copy of the other data by the third storage node, refer to the foregoing content of storing the third copy of the first data by the third storage node. Details are not described herein again.

For example, still refer to FIG. 13. CDS5 may request CSD6 to store the second copy of the other data, so that CSD6 stores the second copy of the other data.

S1214: The first storage node sends a second feedback message to the user equipment. Correspondingly, the user equipment receives the second feedback message from the first storage node. The second feedback message indicates that writing of the other data is completed, and may be considered as a feedback for the another write request. The second feedback message may include the log ID and the second offset.

In a third phase, the storage system writes the check data into the first stripe. For details, refer to the following content in S1215 to S1220.

S1215: If an amount of the second copy of the first data and the second copy of the other data reaches a first threshold, the first storage node determines the check data.

If the first storage node determines that a sum of an amount of the second copy of the first data and an amount of the second copy of the other data has reached the first threshold, the first storage node may calculate the check data of the second copy of the first data and the second copy of the other data. The first threshold may be, for example, storage spaces that can be provided by all of data units of the first stripe, or may be understood as a sum of sizes of data strips included in the first stripe. For example, the first stripe includes six stripe units, the six stripe units include four data units and two check units, and each stripe unit can store 128 KB of data. In this case, the first threshold may be 4*128=512 KB.

It should be understood that the another write request may be one or more write requests. To be specific, after the first write request is received, one or more write request may be received. As long as a sum of the data requested by these write requests to be written and the data requested by the first write request reaches the first threshold, the check data of the first data and the other data can be determined. However, a quantity of requests included in the another write request is not limited.

S 1216: The first storage node sends a fifth pull request to the K2 second storage nodes. Correspondingly, the K2 second storage nodes receive the fifth pull request from the first storage node.

The fifth pull request is for requesting to write the check data into a corresponding check unit of each of the K2 second storage nodes. The fifth pull request may include a size of check data that needs to be written by each of the K2 second storage nodes, address information of the check data, and the like. In addition, the fifth pull request further includes the log ID and a third offset. The third offset indicates a location for storing the check data in the log storage space, for example, a location for storing the check data in the first stripe. The log ID and the third offset uniquely identify the check data in the storage system.

Optionally, S1216 is an optional step, and is shown by using a dashed line in FIG. 12.

S 1217: The K2 second storage nodes store the check data.

After receiving the fifth pull request, the K2 second storage nodes may pull, from the first storage node, data in the check data that needs to be stored, and write, into a corresponding check unit, the data in the check data that needs to be stored. In this way, this is equivalent to fully occupying the first stripe.

After the K2 second storage nodes store the check data, each of the K2 second storage nodes may further record third information. The third information indicates a mapping relationship among the log ID, the third offset, and an address where each second storage node stores the data in the check data. The address of the first data in each second storage node indicates a specific location in the second storage node at which a specific part of data of the check data is stored.

In another possible implementation, if the first storage node and/or the third storage node also have/has a function of the second storage node, S1217 in which the K2 second storage nodes store the check data also includes the following: The first storage node stores a part or all of the check data, and/or the third storage node stores a part or all of the check data.

For example, still refer to FIG. 13. CSD5 may request CSD3 and CSD4 to store check data. Therefore, CSD3 and CSD4 store the corresponding check data.

In a possible implementation, the storage system further supports fault recovery. The following describes several possible fault recovery cases.

### First fault recovery case:

It is assumed that at least one of the K1 second storage nodes is faulty, or at least one data unit (referred to as a first data unit for ease of description) corresponding to at least one of the K1 second storage nodes is faulty. For ease of description, all data that corresponds to the first data and that is stored in the first data unit in this embodiment of this application may be referred to as a first part of data. For example, the first data includes a data chunk D1 and a data chunk D2, and the first data unit stores a first copy of the data chunk D1. Therefore, the first part of data is the first copy of the data chunk D1. In this case, the first storage node may obtain a copy of the first part of data, and write the copy of the first part of data into a second data unit. The second data unit may be distributed on a storage node other than the at least one faulty second storage node in the storage system. This case is equivalent to replacing the first data unit of the first stripe with the second data unit.

The first storage node may directly obtain the copy of the first part of data based on the second copy of the first data, or may obtain the copy of the first part of data based on the third copy of the first data in the third storage node. This is not limited.

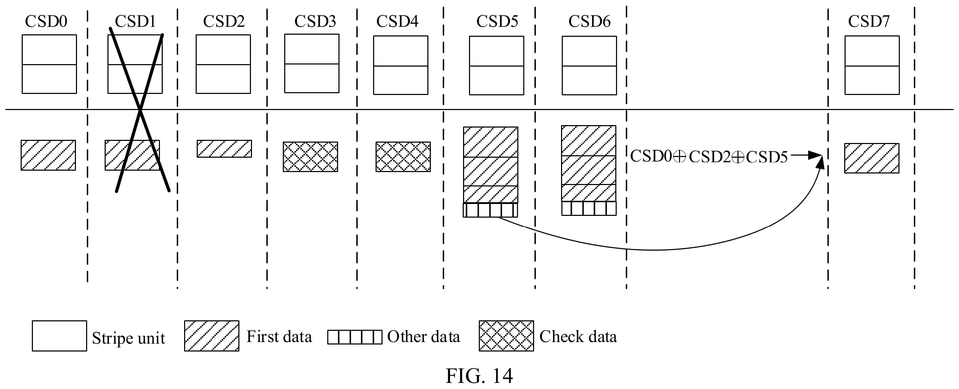

For example, FIG. 14 is a diagram of a fault recovery process according to an embodiment of this application. In FIG. 14, an example in which the plurality of second storage nodes include CSD0 to CSD4, the first storage node is CSD5, and the third storage node is CSD6 is used. It is clear that a storage system in FIG. 14 further includes CSD7. Data units of CSD0 to CSD2 are configured to store data. Check units of CSD3 and CSD4 are configured to store check data. When CSD1 is faulty or the data unit of CSD1 is faulty, the first storage node may determine the copy of the first part of data, and write the copy of the first data part into a data unit of CSD7. In this case, the first stripe includes the data units of CSD0, CSD2, and CSD7 and the check units of CSD3 and CSD4.

### Second fault recovery case:

It is assumed that at least one of the K2 second storage nodes is faulty, or a part of check units (referred to as a first check unit for ease of description) of the first stripe are faulty. For ease of description, all check data that corresponds to the check data and that is stored in the first check unit in this embodiment of this application may be referred to as a first part of check data. For example, the check data includes a check data chunk E1 and a check data chunk E2, and the first data unit stores a first copy of the check data chunk E1. Therefore, the first part of check data is the first copy of the check data chunk E1. In this case, the first storage node may obtain a copy of the first part of check data, and write the copy of the first part of check data into a second check unit. The second check unit may be distributed on a storage node other than the at least one faulty second storage node in the storage system. This case is equivalent to replacing the first check unit with the second check unit. In this case, full stripe of data may be obtained through forced filling, to complete the recovery.

The first storage node may calculate the check data based on the data in the data unit of the first stripe, and obtain the first part of check data in the check data. Alternatively, the first storage node may calculate the check data based on the second copy of the first data, and obtain the first part of check data. Alternatively, the first storage node may calculate the check data based on the third copy of the first data, and obtain the first part of check data.

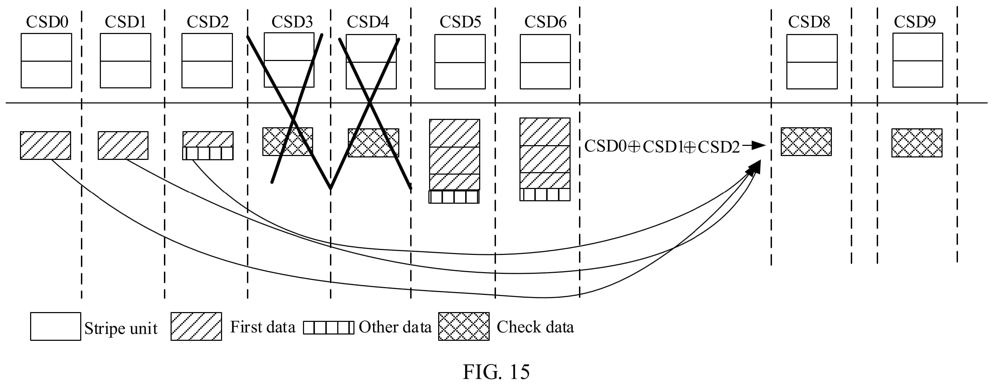

For example, FIG. 15 is a diagram of another fault recovery process according to an embodiment of this application. In FIG. 15, an example in which the plurality of second storage nodes include CSD0 to CSD4, the first storage node is CSD5, and the third storage node is CSD6 is used. It is clear that a storage system in FIG. 15 further includes CSD8 and CSD9. Data units of CSD0 to CSD2 are configured to store data. Check units of CSD3 and CSD4 are configured to store check data.

When CSD3 and CSD4 are faulty, or the data units of CSD3 and CSD4 are faulty, the first storage node may calculate the check data based on the data in CSD0 to CSD2, and store the check data in a check unit corresponding to CSD8 and a check unit corresponding to CSD9 in a distributed manner. In this case, the first stripe includes the data units of CSD0, CSD1, and CSD2 and the check units of CSD8 and CSD9.

S1218: The first storage node deletes the second copy of the first data and the second copy of the other data.

Because the first data, the other data, and the check data have all been written into the first stripe, the first storage node may delete the second copy of the first data and the second copy of the other data that are stored in the first storage node. In this way, this helps release a space of the first storage node in a timely manner, so that the first storage node can provide the storage space for a subsequent data writing process.

S1219: The first storage node sends a processing request to the third storage node. Correspondingly, the third storage node receives the processing request from the first storage node. The processing request is for requesting to delete the third copy of the first data and the third copy of the other data.

S1220: The third storage node deletes the third copy of the first data and the third copy of the other data. In this way, this helps release a storage space of the third storage node in a timely manner, so that the third storage node can provide the storage space for a subsequent data writing process.

For example, still refer to FIG. 13. The first data, the other data, and the check data have all been written into the first stripe, CSD5 deletes the second copy of the first data and the second copy of the other data, and CSD6 deletes the third copy of the first data and the third copy of the other data.

Optionally, S1218 to S1220 are optional steps, and are shown by using dashed lines in FIG. 12.

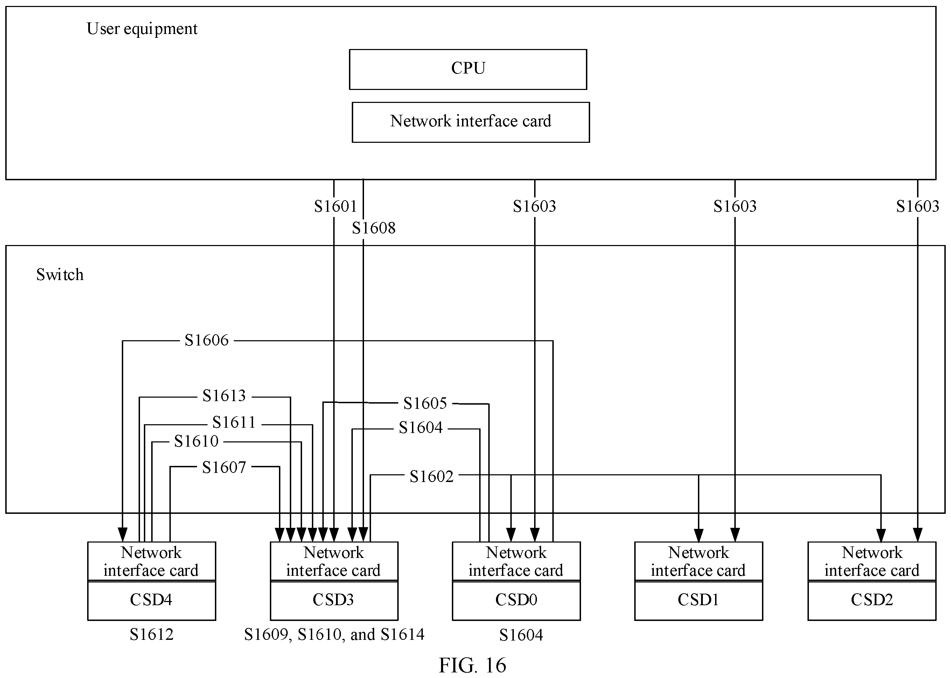

To further describe the data processing method provided in embodiments of this application, the following describes a data processing process in embodiments of this application by using an example in which the first storage node is CSD3, the K1 first storage nodes are CSD0 to CSD2, the K2 second storage nodes are CSD3 and CSD4, and the third storage node is CSD4 and an example in which a CSD communicates with a user equipment via a network interface card and a switch in FIG. 16.

FIG. 16 is a diagram of a data processing process according to an embodiment of this application. FIG. 16 shows steps S1601 to S1614. The following separately describes the steps.

S1601: CSD3 receives another write request from the user equipment. For content of the another write request, refer to the foregoing content of the another write request in FIG. 12.

S1602: CSD3 separately sends a third pull request to CSD0 to CSD2. Optionally, the third pull request may include a log ID of a log storage space and an offset.

S1603: CSD0 to CSD2 pull a first copy of other data from the user equipment to an SRAM of the user equipment.

S1604: CSD0 to CSD2 write a part of data in the first copy of the other data into respective flashes or DRAMs of CSD0 to CSD2, and record second information in the log storage space. In this way, this is equivalent to that CSD0 to CSD2 write the other data into a first stripe.

S1605: CSD3 reads a second copy of the other data from SRAMs of CSD0 to CSD2, pulls the second copy of the other data to an SRAM of CSD3, and sends a fourth pull request to CSD4. For content of the fourth pull request, refer to the foregoing content in FIG. 12.

S1606: CSD4 pulls, to a DRAM of CSD4, a third copy of the other data read from the SRAMs of data CSD0 to CSD2.

S1607: CSD4 completes the fourth pull request of CSD3.

S1608: CSD4 sends a second feedback message to the user equipment. In this way, this is equivalent to completing a command of a user.

Optionally, CSD4 may request CSD0 to CSD2 to delete the first copy of the other data stored in the respective SRAMs of CSD0 to CSD2. CSD0 to CSD2 calculate a quantity of copies that have been obtained through replication, and automatically release the SRAMs.

S1601 to S1608 may be considered as a foreground operation part.

S1609: If a second copy of first data and the second copy of the other data reach a first threshold, calculate check data.

S1610: CSD4 stores a part of the check data in a flash of CSD4, records fourth information, releases the second copy of the first data and the second copy of the other data, and may further send a fifth pull request to CSD3. The fourth information may be considered as an example of the foregoing third information in FIG. 12. The fourth information indicates a mapping relationship among the log ID, a third offset, and an address of the check data in CSD4.

S1611: CSD3 pulls the other part of the check data from an SRAM of CSD4.

S1612: CSD3 stores the other part of the check data in a flash of CSD3, records fifth information in the log storage space, and releases a third copy of the first data and the third copy of the other data. The fifth information may be considered as an example of the foregoing third information in FIG. 12. The fifth information indicates a mapping relationship among the log ID, the third offset, and an address of the check data in CSD3.

S1613: CSD3 completes the fifth pull request of CSD4.

S1614: After determining that CSD3 has stored the other part of the check data, CSD4 releases the calculated check data.

S1609 to S1614 may be considered as a background operation part.

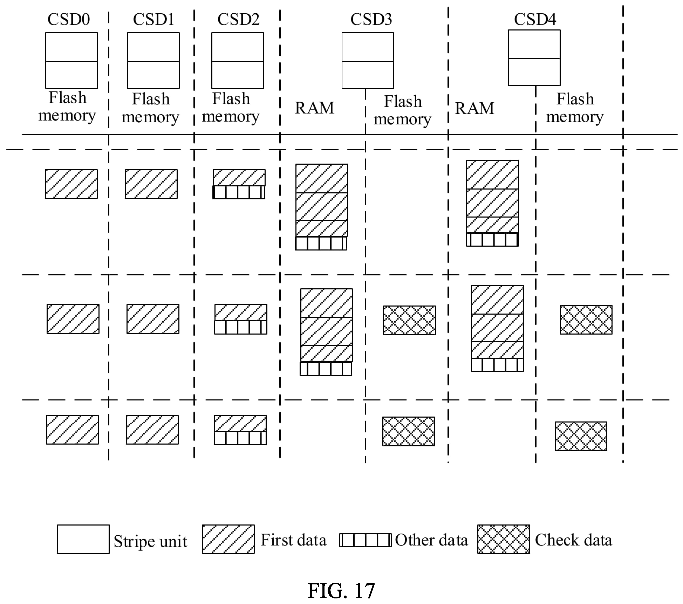

For example, FIG. 17 is a diagram of a data writing process according to an embodiment of this application. In FIG. 17, an example in which CSD0 to CSD4 are the plurality of second storage nodes, the first storage node is CSD3, the third storage node is CSD4, and the first stripe is obtained by mapping physical storage spaces provided by flashes of CSD0 to CSD4 is used.

CSD3 may separately send a third pull request to CSD0, CSD1, and CSD2. Data units of CSD0, CSD1, and CSD2 are configured to store a first copy of other data. In addition, the data units of CSD0, CSD1, and CSD2 further store a first copy of first data. In addition, a RAM (for example, an SRAM) of CSD3 further stores a second copy of the first data and a second copy of the other data, and a RAM (for example, a DMRA) of CSD4 stores a third copy of the first data and a third copy of the other data.

CSD3 determines that the first data and the other data reach a first threshold, and therefore, calculates check data of the first data and the other data, and writes the check data into check units of CSD3 and CSD4. CSD3 may delete the second copy of the first data and the second copy of the other data, and CSD4 may delete the third copy of the first data and the third copy of the other data.

An embodiment of this application provides a storage system. The storage system may include a first storage node and a plurality of second storage nodes. The first storage node and the plurality of second storage nodes may collaboratively implement the data processing method described above, for example, the foregoing data processing method in FIG. 12 or FIG. 16. For content of the first storage node, refer to the content of the first storage node in FIG. 12 or FIG. 16, and for content of the plurality of second storage nodes, refer to the foregoing content of the plurality of second storage nodes in FIG. 12 or FIG. 16. Repeated parts are not described again. Optionally, the storage system further includes a third storage node. For content of the third storage node, refer to the foregoing content of the third storage node in FIG. 12 or FIG. 16. Repeated parts are not described again.

An embodiment of this application provides a computer-readable storage medium. The computer-readable storage medium is configured to store a computer program or instructions. When the computer program or instructions are run, the foregoing data processing method, for example, the foregoing data processing method in FIG. 12 or FIG. 16, is implemented. The computer-readable storage medium may be any usable medium that can be stored by a compute device, or a data storage device, such as a data center, including one or more usable media. The usable medium may be a magnetic medium (for example, a floppy disk, a hard disk, or a magnetic tape), an optical medium (for example, a DVD), a semiconductor medium (for example, a solid-state drive), or the like.

An embodiment of this application provides a computer program product including instructions. When the computer program product runs on a computer, the foregoing data processing method, for example, the foregoing data processing method in FIG. 12 or FIG. 16, is implemented. The computer program product may be software or a program product that includes instructions and that can be run on a compute device or be stored in any usable medium.

The method steps in embodiments of this application may be implemented in a hardware manner, or may be implemented in a manner of executing software instructions by a processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, the storage medium is coupled to the processor, so that the processor can read information from the storage medium and write information into the storage medium. It is clear that the storage medium may alternatively be a component of the processor. The processor and the storage medium may be disposed in an ASIC. In addition, the ASIC may be disposed in a base station or a terminal. It is clear that the processor and the storage medium may exist in the base station or the terminal as discrete components.

All or some of the foregoing embodiments may be implemented by software, hardware, firmware, or any combination thereof. When software is used to implement the foregoing embodiments, all or some of the foregoing embodiments may be implemented in a form of a computer program product. The computer program product includes one or more computer programs or instructions. When the computer programs or the instructions are loaded and executed on a computer, all or some of the procedures or functions in embodiments of this application are executed. The computer may be a general-purpose computer, a dedicated computer, a computer network, a network device, a user equipment, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile storage medium or a non-volatile storage medium, or may include two types of storage media: a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined into a new embodiment based on an internal logical relationship thereof.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A data processing method, comprising:
receiving a first write request, wherein the first write request is for requesting to write first data;
writing a first copy of the first data into a first stripe, and writing a second copy of the first data into a first storage node, wherein the first stripe is distributed across a plurality of second storage nodes;
receiving another write request, wherein the another write request is for requesting to write other data;
writing a first copy of the other data into the first stripe, and storing a second copy of the other data in the first storage node;
if an amount of the first data and the other data reaches a first threshold, generating check data of the first data and the other data based on the second copy of the first data and the second copy of the other data; and
writing the check data into the first stripe.

2. The method according to claim 1, wherein the first threshold is an amount of data that at least one data unit is capable of storing, and the at least one data unit is a stripe unit that is in a plurality of stripe units of the first stripe and that is configured to store data.

3. The method according to claim 1 or 2, wherein the first stripe comprises the plurality of stripe units, the plurality of stripe units comprise the at least one data unit configured to store the data, a first part of data in the first copy of the first data is stored in a first data unit of the at least one data unit, and before storing the second copy of the other data in the first storage node, the method further comprises:
if the first data unit is faulty, storing data that is in the second copy of the first data and that is the same as the first part of data in another data strip; and
replacing the first data strip with the another data strip.

4. The method according to any one of claims 1 to 3, wherein after storing the check data in the first stripe, the method further comprises:
deleting the second copy of the first data in the first storage node.

5. The method according to any one of claims 1 to 4, wherein before storing the second copy of the other data in the first storage node, the method further comprises:
receiving a first read request, wherein the first read request is for requesting to read the first data; and
in response to the first read request, reading data in a data strip of the first stripe, to obtain the first copy of the first data.

6. A storage system, wherein the system comprises a first storage node and a plurality of second storage nodes, wherein
the first storage node is configured to receive a first write request, wherein the first write request is for requesting to write first data;
the plurality of second storage nodes are configured to write a first copy of the first data into a first stripe, and the first storage node is further configured to write a second copy of the first data into the first storage node, wherein the first stripe is distributed across the plurality of second storage nodes;
the first storage node is further configured to receive another write request, wherein the another write request is for requesting to write other data;
the plurality of second storage nodes are further configured to write a part or all of a first copy of the other data into a data unit distributed in stripe units of the first stripe, and the first storage node is further configured to write a second copy of the other data into the first storage node;
if an amount of the first data and the other data reaches a first threshold, the first storage node generates check data of the first data and the other data based on the second copy of the first data and the second copy of the other data; and
the plurality of second storage nodes are configured to write the check data into the first stripe.

7. The system according to claim 6, wherein the first threshold is an amount of data that at least one data unit is capable of storing, and the at least one data unit is a stripe unit that is in the plurality of stripe units of the first stripe and that is configured to store data.

8. The system according to claim 6 or 7, wherein the first stripe comprises the plurality of stripe units, the plurality of stripe units comprise the at least one data unit configured to store the data, a first part of data in the first copy of the first data is stored in a first data unit of the at least one data unit, and the first storage node is further configured to:
before the second copy of the other data is stored in the first storage node, if the first data unit is faulty, store data that is in the second copy of the first data and that is the same as the first part of data in another data strip, wherein the first data strip is replaced with the another data strip.

9. The system according to any one of claims 6 to 8, wherein the first storage node is further configured to:
after the check data is stored in the first stripe, delete the second copy of the first data in the first storage node.

10. The system according to any one of claims 6 to 9, wherein any one of the plurality of second storage nodes is further configured to:
receive a first read request, wherein the first read request is for requesting to read the first data; and
in response to the first read request, read data in a data strip of the first stripe, to obtain the first copy of the first data.

11. The system according to any one of claims 6 to 10, wherein the first storage node is one of the plurality of second storage nodes, and at least one check unit of the first stripe is distributed in the first storage node, wherein the at least one check unit stores a part or all of the check data.

12. The system according to any one of claims 6 to 11, wherein
the first storage node comprises a computational storage drive CSD; or
the first storage node comprises a data processor DPU and a persistent memory.

13. A computer program product comprising instructions, wherein when the instructions are run by a compute device cluster, the compute device cluster is caused to perform the method according to any one of claims 1 to 5.

14. A computer-readable storage medium, wherein the storage medium stores a computer program or instructions, and when the computer program or the instructions are executed by a communication apparatus, the method according to any one of claims 1 to 5 is implemented.
